# EUROPEAN PATENT SPECIFICATION

(11) **EP 2 610 851 B1**
(45) Date of publication and mention of the grant of the patent: **28.06.2017**
(21) Application number: 11819615.3
(22) Date of filing: 31.01.2011
(51) Int. Cl.: G09G 3/36, G02F 1/133, G02F 1/1333, G09G 3/20

(54) **IMAGE CORRECTION DATA GENERATION SYSTEM FOR DISPLAY PANEL USING UNPOLISHED GLASS, IMAGE CORRECTION DATA GENERATION METHOD AND IMAGE CORRECTION DATA GENERATION PROGRAM**
SYSTEM ZUR ERZEUGUNG VON BILDKORREKTURDATEN FÜR EINE ANZEIGETAFEL MIT UNPOLIERTEM GLAS, VERFAHREN ZUR ERZEUGUNG VON BILDKORREKTURDATEN UND PROGRAMM ZUR ERZEUGUNG VON BILDKORREKTURDATEN
SYSTÈME GÉNÉRATEUR DE DONNÉES DE CORRECTION D'IMAGE DESTINÉ À UN PANNEAU D'AFFICHAGE UTILISANT UN VERRE NON POLI, PROCÉDÉ DE PRODUCTION DE DONNÉES DE CORRECTION D'IMAGE ET PROGRAMME DE PRODUCTION DE DONNÉES DE CORRECTION D'IMAGE

(30) Priority: 24.08.2010 JP 2010187419
(43) Date of publication of application: 03.07.2013
(73) Proprietor: IIX, Inc., Shinagawa-ku Tokyo 141-0031 (JP)
(72) Inventor: ISHIKAWA, Shigeharu, Tokyo 141-0031 (JP); NISHI, Tomoya, Tokyo 141-0031 (JP)
(74) Representative: Lampis, Marco
(86) International application number: PCT/JP2011/051862
(87) International publication number: WO 2012/026139

(56) References cited:
- WO-A1-2010/013753
- JP-A- 2006 017 853
- JP-A- 2007 086 581
- JP-A- 2009 271 501
- JP-A- 2009 276 391
- US-A1- 2003 193 489

## Description

### Technical Field

The present invention relates to an image correction data generating system, an image correction data generating method, and an image correction data generating program for efficiently suppressing display unevenness in a display panel that uses unpolished glass.

### Background Art

Currently, production lines for displays such as liquid crystal displays are structured to enable the realization of uniform quality. However, irregularities may still occur among individual displays during their production on such production lines. Consequently, technology for adjusting identical displays such that each display can output better images is being investigated (see Patent Literature 1, for example). With the technology described in Patent Literature 1, a controller of an image quality adjusting apparatus generates a test pattern and supplies the test pattern to a liquid crystal panel. The liquid crystal panel displaying the test pattern is captured by an imaging camera, and the controller acquires output image data from the imaging camera. The controller then applies band filtering to the output image data, and computes an image correction table for each reference gradation. Then, when computation of an image correction table is finished for all reference gradations, the controller writes the image correction tables to ROM in a correction circuit. An image signal for displaying an image on the display panel is adjusted by correction values which are linearly interpolated by referencing the image correction tables recorded in the ROM.

Manufacturing liquid crystal display apparatus equipped with such display panels demands the use of glass substrates with flatter surfaces. For this reason, polishing methods for producing glass panes with high degrees of surface flatness are being investigated (see Patent Literature 2, for example). With the technology described in Patent Literature 2, a float glass pane is affixed to and held by a glass pane affixing area on a ceramic glass pane holding surface. Then, the glass pane is pressed against a polishing pad affixed to a surface disposed opposite to the glass pane as the two surfaces are rotated, while in addition, the polishing pad is supplied with a cerium oxide polishing solution to polish the surface of the glass pane.

### Citation List

### Patent Literature

PTL 1: Japanese Patent Laid-Open No. 2010-57149 (pg. 1, FIG. 1)
PT L 2: Japanese Patent Laid-Open No. 2000-218481 (pg. 1, FIG. 1) US2003/193489 discloses a system for correcting display device and method for correcting the same.

### Summary of Invention

### Technical Problem

However, high-precision polishing of glass used for large liquid crystal displays, etc. is time-consuming and correspondingly costly. On the other hand, if cheap unpolished glass is used, high-quality images cannot be provided due to unevenness caused by irregularities and fine scratches on the glass surface. Such irregularities and fine scratches on unpolished glass are affected by the glass production process, and differ depending on the production lot.

It is an objective of the present invention to provide an image correction data generating system, an image correction data generating method, and an image correction data generating program for efficiently suppressing display unevenness in a display panel that uses unpolished glass as defined in the attached independent claims.

### Solution to Problem

The invention is set forth in the independent claims 1 and 2. In order to achieve the above object, in a first aspect of the present invention there is provided an image correction data generating system for a display panel that includes a plurality of pixels and also uses unpolished glass. The image correction data generating system is equipped with a signal generator, an imager, and a controller. The signal generator supplies the display panel with a signal for causing that display panel to output an image. The imager captures an output image displayed on the display panel. The controller is connected to the signal generator and the imager. The imager is able to resolve an area smaller than the individual pixel sizes of the plurality of pixels. The controller is equipped with an instructing unit, an image acquirer, a high-pass filter, and a correction data generator. The instructing unit outputs instructions for supplying a signal value shared across the entire surface of the display panel to the signal generator. The image acquirer acquires output image data from the imager. The high-pass filter computes high-pass data by applying high-pass filtering to the output image data. The correction data generator outputs an image correction table corresponding to the high-pass data.

Preferably, the controller identifies the production lot of the unpolished glass being used in the display panel, and determines a frequency for the high-pass filtering on the basis of the production lot.
Preferably, the controller identifies the direction of stripe unevenness in the unpolished glass, and increases the resolution of the imager in the direction orthogonal to the direction of the stripe unevenness.

In a second aspect of the present invention, there is provided a method of generating image correction data using an image correction data generating system for a display panel that includes a plurality of pixels and also uses unpolished glass. The image correction data generating system is equipped with a signal generator, an imager, and a controller. The signal generator supplies the display panel with a signal for outputting an image on that display panel. The imager captures an output image displayed on the display panel. The controller is connected to the signal generator and the imager. The imager is able to resolve an area smaller than the individual pixel sizes of the plurality of pixels. The controller executes outputting instructions for supplying a signal value shared across the entire surface of the display panel to the signal generator, acquiring output image data from the imager, computing high-pass data by applying high-pass filtering to the output image data, and outputting an image correction table corresponding to the high-pass data.

In a third aspect of the present invention, there is provided a program that generates image compensation data using an image correction data generating system for a display panel that includes a plurality of pixels and also uses unpolished glass. The image correction data generating system is equipped with a signal generator, an imager, and a controller. The signal generator supplies the display panel with a signal for outputting an image on that display panel. The imager images an output image displayed on the display panel. The controller is connected to the signal generator and the imager. The imager is able to resolve an area smaller than the individual pixel sizes of the plurality of pixels. The image compensation data generating program causes the controller to execute outputting instructions for supplying a signal value shared across the entire surface of the display panel to the signal generator, acquiring output image data from the imager, computing high-pass data by applying high-pass filtering to the output image data, and outputting an image correction table corresponding to the high-pass data.

### (Action)

According to an invention in accordance with the first to third aspects of the present invention, an imager able to resolve an area smaller than the pixel size of the display panel is used as an imager. In addition, the controller outputs instructions for supplying a signal value shared across the entire surface of the display panel to the signal generator, and acquires output image data from the imager. The controller computes high-pass data by applying high-pass filtering to the output image data, and outputs an image correction table corresponding to the high-pass data. Thus, image correction data for suppressing display unevenness on the basis of an captured image can be generated for a display panel that uses comparatively cheap unpolished glass. Herein, gradually changing display unevenness is not corrected by conducting high-pass filtering. Consequently, the effects of localized dimming can be eliminated, while in addition, display unevenness due to fine scratches occurring in unpolished glass can be easily and efficiently reduced.

According to a preferred aspect, the controller identifies the production lot of the unpolished glass being used in the display panel, and determines a frequency for the high-pass filtering on the basis of the production lot. Unpolished glass may have irregularities, scratches, or other surface states in common, depending on the production lot. Consequently, by using filtering according to production lot, image correction data can be efficiently generated.

According to a preferred aspect, the controller identifies the direction of stripe unevenness in the unpolished glass, and increases the resolution of the imager in the direction orthogonal to the direction of the stripe unevenness. For example, the horizontal resolution may be raised in the case of stripe unevenness in the vertical direction of the display panel, and the vertical resolution may be raised in the case of stripe unevenness in the horizontal direction. Thus, image correction data can be efficiently generated according to the surface state of the unpolished glass.

### Brief Description of Drawings

FIG. 1 is a diagram illustrating an image correction data generating system according to an embodiment of the present invention;
FIG. 2 is a diagram illustrating a correction data generating process executed in the system from FIG. 1; and
FIG. 3 is a diagram illustrating a correction circuit provided in the system from FIG. 1.

### Description of Embodiments

Hereinafter, an image correction data generating system, an image correction data generating method, and an image correction data generating program of the present invention will be described. In the present embodiment, the case of improving image quality by suppressing display unevenness (brightness unevenness) in a display panel being adjusted is envisioned. Note that in the present embodiment, a liquid crystal panel 10 is used as the display panel being adjusted.

The liquid crystal panel 10 is equipped with liquid crystal (a liquid crystal unit) sandwiched between transparent electrodes, and a backlight that illuminates the liquid crystal from behind. In the present embodiment, unpolished glass that has not been subjected to polishing is used as the glass substrate constituting the liquid crystal unit. With such glass, stripe unevenness due to irregularities and fine scratches may occur, as described in Patent Literature 2. For this reason, an image overlaid with unevenness from the liquid crystal unit, unevenness dependent on the unpolished glass, and localized dimming of the backlight is output on the liquid crystal panel 10.

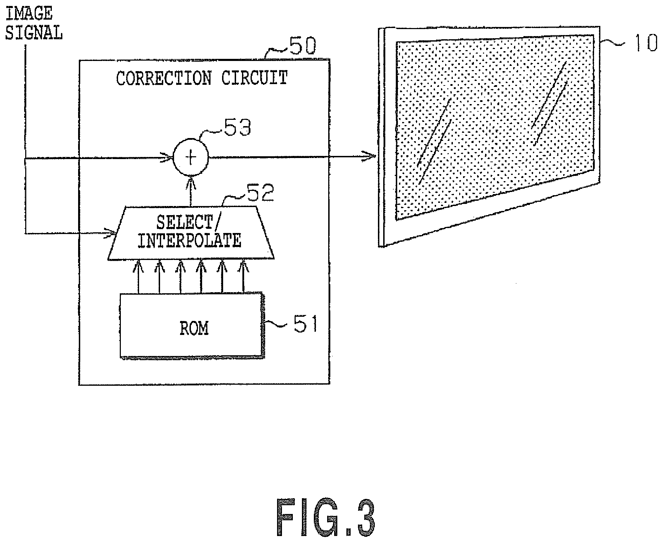

In order to improve the image quality of the liquid crystal panel 10, a correction circuit 50 is used, as illustrated in FIG. 3. The correction circuit 50 is equipped with non-volatile memory (ROM 51) for recording image correction tables.

Recorded in the ROM 51 is data related to correction values for adjusting the signal values of an input image signal (image correction tables). In the present embodiment, a planar distribution of correction values for each reference gradation is recorded.

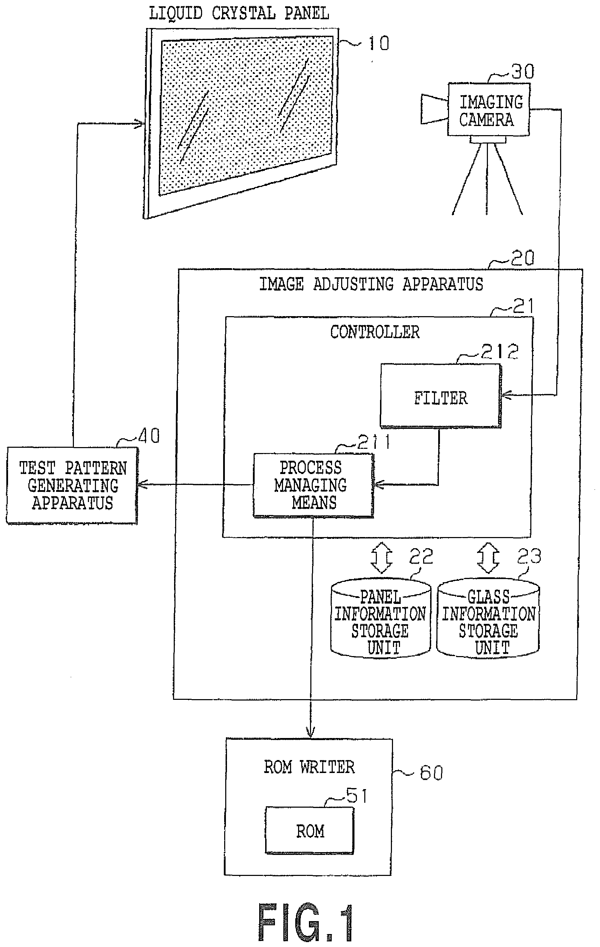

Additionally, an image correction data generating system for computing such correction values is equipped with an image adjusting apparatus 20, an imaging camera 30, a test pattern generating apparatus 40, and a ROM writer 60, as illustrated in FIG. 1.

Herein, the imaging camera 30, taken to be an imager, captures an image being displayed on the liquid crystal panel 10, and supplies output image data to the image adjusting apparatus 20. In the present embodiment, a monochrome camera equipped with a CCD element able to resolve an area smaller than the pixel size of individual pixels on the display panel (the pixel pitch) is used as the imaging camera 30.

The test pattern generating apparatus 40, taken to be a signal generator, supplies a test pattern signal to the liquid crystal panel 10 on the basis of instructions from the image adjusting apparatus 20. In the present embodiment, an 8-bit RGB signal is supplied to the entire surface of the liquid crystal panel 10.

The ROM writer 60 writes correction value data output from the image adjusting apparatus 20 to the ROM 51.
The image adjusting apparatus 20 is a computer terminal that executes processing to compute correction values for adjusting the image quality of the liquid crystal panel 10. The image adjusting apparatus 20 is equipped with a controller 21, a panel information storage unit 22, and a glass information storage unit 23.

The panel information storage unit 22 stores panel management records for identifying the production lot which produced the unpolished glass being used in a liquid crystal panel 10. A panel management record is registered in the case of acquiring a liquid crystal panel 10 to be adjusted. A panel management record includes a panel identifier data area and a lot identifier data area.

Data related to an identifier for identifying a particular liquid crystal panel 10 is recorded in the panel identifier data area.
Data related to an identifier for identifying the production lot of the unpolished glass being used in the liquid crystal panel 10 is recorded in the lot identifier data area. For liquid crystal panels 10 using unpolished glass from the same production lot, the same lot identifier is recorded, although the panel identifiers differ.

The glass information storage unit 23 stores glass management records for identifying surface state information regarding unpolished glass from respective production lots. A glass management record is registered in the case of acquiring a liquid crystal panel 10 to be adjusted. A glass management record includes a lot identifier data area and a surface state identifier data area.

Data related to an identifier for identifying the production lot of the unpolished glass is recorded in the lot identifier data area.
Data related to an identifier for identifying the surface state of the unpolished glass from the production lot is recorded in the surface state identifier data area. The surface state identifier is assigned by rating the surface state of the unpolished glass (such as irregularities and the size and density of scratches) according to a given measurement method (such as a roughness measurement or a reflectance measurement).

The controller 21 includes a CPU, RAM, and ROM, etc., and conducts a process to be discussed later (a process that includes an instructing step, an image acquiring step, a high-pass filtering step, a correction data generating step, etc.). By executing a correction table generating program for this purpose, the controller 21 functions as a process manager 211 and a filter 212, as illustrated in FIG. 1.

The process manager 211 functions as an instructing unit, an image acquirer, and a correction data generating unit. Specifically, the process manager 211 acquires a lot identifier for unpolished glass being used in a liquid crystal panel 10 to be adjusted. By using the lot identifier, information regarding the surface conditions of the unpolished glass can be acquired. Furthermore, the process manager 211 is equipped with a filter determination table for determining a high-pass filter. In the filter determination table, filtering frequencies which are passed through in a high-pass filter are associated with surface state identifiers.

In addition, the process manager 211 controls a signal input into a liquid crystal panel 10, and also executes a process that computes correction values on the basis of output image data displayed on the liquid crystal panel 10.

The filter 212 (high-pass filter) generates high-pass data in which the gently varying components have been removed from the output image data acquired from the imaging camera 30. In other words, the filter 212 conducts high-pass filtering so as to remove the low-frequency components and separate out only the mid-frequency components and the high-frequency components.

### (Correction data generating process)

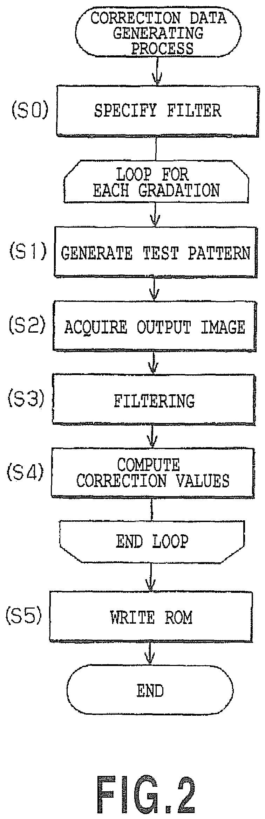

Next, a correction data generating process will be described using FIG. 2. Herein, an image correction data table for suppressing display unevenness will be generated for each of given gradations. Specifically, a distribution of correction values on a liquid crystal panel 10 is computed for each of preset gradations (reference gradations). In the present embodiment, a given number of reference gradations (10 levels, for example) among the signal values expressed by 8 bits will be used. Then, gradations to be adjusted which correspond to the reference gradations are successively changed one level at a time to generate an image correction table for each gradation to be adjusted.

First, in step S0 the controller 21 of the image adjusting apparatus 20 executes a filter specifying process. Specifically, an operator uses the keyboard, etc. of the image adjusting apparatus 20 to input the panel identifier of a liquid crystal panel 10 to be adjusted into the image adjusting apparatus 20. Thus, the process manager 211 of the controller 21 acquires a panel identifier. Then, the process manager 211 acquires the lot identifier associated with the panel identifier from the panel information storage unit 22. Then, the process manager 211 acquires the surface state identifier associated with the lot identifier from the glass information storage unit 23. Next, the process manager 211 uses the filter determination table to specify the filtering frequency corresponding to the surface state identifier. Then, the process manager 211 provides the filter 212 with filter parameters which include the filtering frequency. Thus, the filter 212 operates as a high-pass filter that allows components at or above the filtering frequency to pass through.

Next, in step S1 the controller 21 of the image adjusting apparatus 20 executes a test pattern generating process. Specifically, the process manager 211 of the controller 21 instructs the test pattern generating apparatus 40 to output an RGB signal for outputting an image of a gradation to be adjusted. At this point, an RGB signal in which the R signal values, the G signal values, and the B signal values are the same across the entire surface of the liquid crystal panel 10 (a shared signal value) is used for the gradation to be adjusted. In response to the instructions, the test pattern generating apparatus 40 supplies the liquid crystal panel 10 with an 8-bit RGB signal that yields the gradation to be adjusted.

The liquid crystal panel 10 then outputs (displays) a gray image of the gradation to be adjusted according to the input of the RGB signal. In this case, if cell gap unevenness in the liquid crystal, unevenness dependent on the unpolished glass, or unevenness in the backlight brightness exists, a display unevenness in which these unevenness are overlaid will be produced on the liquid crystal panel 10. At this point, the imaging camera 30 captures the image with the overlaid display unevenness.

Then, in step S2 the controller 21 of the image adjusting apparatus 20 executes an output image acquiring process. Specifically, the process manager 211 of the controller 21 imports output image data obtained by imaging the liquid crystal panel 10 from the imaging camera 30. The process manager 211 then converts the output image data into luminance distributions for individual blocks made up of 8x8 pixels, which are supplied to the filter 212.

Next, in step S3 the controller 21 of the image adjusting apparatus 20 executes a filtering process. Specifically, the filter 212 of the controller 21 computes high-pass data by applying high-pass filtering to the acquired output image data. The high-pass data is constructed from a distribution from which the low-frequency components have been removed with respect to the on-screen luma distribution of the liquid crystal panel 10. The filter 212 then supplies the generated high-pass data to the process manager 211.

Next, in step S4 the controller 21 of the image adjusting apparatus 20 executes a correction value computing process. Specifically, the process manager 211 of the controller 21 generates an image correction table that inverts the high-pass data. Additionally, the process manager 211 temporarily stores the image correction table to memory, in association with an identifier that specifies the reference gradation used in the image quality adjustment.

Then, the controller 21 of the image adjusting apparatus 20 repeats the processes described above for the next gradation to be adjusted.

In the case where the computation of correction data has finished for all reference gradations, in step S5 the controller 21 of the image adjusting apparatus 20 executes a ROM writing process. Specifically, the process manager 211 of the controller 21 writes the temporarily stored image correction tables to the ROM 51. Thus, a distribution of correction values for on-screen block positions (xy coordinates) on the liquid crystal panel 10 is recorded to the ROM 51 for each reference gradation.

### (Image displaying process)

Additionally, the ROM 51 generated in correspondence with the liquid crystal panel 10 is built into a correction circuit 50. The correction circuit is a circuit that adjusts image signals supplied to the liquid crystal panel 10. Specifically, an image signal (RGB signal) for displaying an image on the liquid crystal panel 10 is supplied to the liquid crystal panel 10 as well as to the correction circuit 50.

Besides the ROM 51, the correction circuit 50 is equipped with a selector/interpolator 52, and an adder 53.
The selector/interpolator 52 references the image correction tables recorded in the ROM 51 for each RGB signal. Herein, the selector/interpolator 52 acquires correction values determined by the four block grid points enclosing an image signal pixel position (xy coordinates) in the image correction tables for two reference gradations adjacent to each RGB signal value in the image signal (2x4=8 correction values). The selector/interpolator 52 then linearly interpolates the acquired correction values according to the distance between the signal value of the image signal and each grid point.

Then, the adder 53 adds the correction values acquired from the selector/interpolator 52 to the input image signal. The liquid crystal panel 10 acquires the corrected image signal and displays an image.
According to the present embodiment, advantages like the following may be obtained.

(1) In the present embodiment, a correction circuit 50 is equipped with ROM 51, a selector/interpolator 52, and an adder 53. Recorded in the ROM 51 are image correction tables generated from display unevenness in images that have been captured by an imaging camera 30. Since display unevenness occurs because the brightness of respective pixels differs from ideal values, if the divergence of each pixel from its ideal value is measured in advance, it is possible to cancel out the display unevenness by correcting the input image value for each pixel according to its divergence.

(2) In the present embodiment, an image correction table for each reference gradation is recorded in the ROM 51. The occurrence of display unevenness is not fixed with respect to input level, even for the same pixel. Since an image correction table for each reference gradation is recorded in the ROM 51, correction according to the signal value of each pixel can be conducted.

(3) In the present embodiment, distributions subjected to high-pass filtering are used to generate image correction tables. Thus, correction is not applied to gradual changes in brightness. Whereas unevenness of the liquid crystal itself is 1% or less, or approximately 5% in severe cases, localized dimming of the backlight can be approximately 30% in severe cases. In the hypothetical case of correcting a completely white (100% gray) image without conducting removal of low-frequency components (low cut), the image would be affected by localized dimming, and brightness near the center portion of the liquid crystal panel 10 would be lowered. In such cases, gradual changes in light intensity across the entire screen are difficult to detect for the human eye. Consequently, in the case of applying correction without performing a low cut, only a lowered brightness in the liquid crystal panel 10 is observed.

Also, since the high-frequency region is not removed, it is possible to generate correction tables that take into account stripe unevenness (with high - frequency components of spatial frequency) that occur due to fine scratches in unpolished glass. (4) In the present embodiment, a controller 21 of an image adjusting apparatus 20 executes a filter specifying process (step S0). The controller 21 identifies the surface state on the basis of a lot identifier for the unpolished glass being used in the liquid crystal panel 10 being adjusted, and uses a filter that corresponds to this surface state. Similar irregularities and scratches may occur in unpolished glass from the same production lot. Thus, filtering associated with the production lot can be conducted.

Additionally, the foregoing embodiment may also be modified as follows. In the foregoing embodiment, a monochrome camera is used to conduct brightness unevenness correction. The display unevenness to be suppressed is not limited to brightness, and the present invention is also applicable to the correction of color unevenness. In the case of correcting both brightness unevenness and color unevenness, three optical filters (RGB) are used to acquire output images with respective imagers. Then, correction values are computed from the respective images by the above high-pass filtering process (step S3) and the correction value computing process (step S4). Then, three types of image correction tables for R signals, G signals, and B signals are generated and recorded to the ROM 51. Thus, the RGB data of an input image can be corrected, and color unevenness can be suppressed.

In the foregoing embodiment, an image with matching R, G, and B signal values is rated to conduct brightness unevenness correction. In the case of correcting color unevenness, it is also possible to respectively and independently provide a solid color R signal, G signal, and B signal to the liquid crystal panel 10 rather than using optical filters, and generate image correction tables by the output image acquiring process (step S2), the high-pass filtering process (step S3), and the correction value computing process (step S4).

Although the foregoing embodiment is applied to the suppression of display unevenness in a liquid crystal panel 10, the display panel to be adjusted is not limited thereto. The present invention is also applicable to an image output apparatus such as a plasma display (PDP).

In the foregoing embodiment, a controller 21 of an image adjusting apparatus 20 executes a filter specifying process (step S0). Specifically, an operator uses the keyboard, etc. of the image adjusting apparatus 20 to input the panel identifier of a liquid crystal panel 10 to be adjusted into the image adjusting apparatus 20. Instead of this, the image adjusting apparatus 20 may also be configured to automatically acquire a panel identifier. In this case, an adjustment target table storing panel identifiers according to the adjustment order of liquid crystal panels 10 is prepared in advance. Then, during adjustment, the panel identifiers are sequentially read out from the adjustment target table.

Additionally, it may also be configured such that the test pattern generating apparatus 40 reads out a panel identifier stored in a liquid crystal panel 10, and causes the panel identifier to be displayed on the liquid crystal panel 10. Additionally, it is also possible to affix a plate displaying the panel identifier on the frame of a liquid crystal panel 10. In such cases, the imaging camera 30 scans the panel identifier displayed on the liquid crystal panel 10, and identifies the panel identifier by character recognition processing (OCR).

In the foregoing embodiment, a monochrome camera equipped with a CCD element able to resolve an area smaller than the pixel size of the display panel is used as an imaging camera 30. Herein, it is not necessary for the resolution of the imager to be identical to that in the two-dimensional plane of the liquid crystal panel 10. Specifically, the direction of stripe unevenness in the unpolished glass is identified, and an imaging camera 30 with increased resolution in the direction orthogonal to the direction of the stripe unevenness is used. Herein, the direction of stripe unevenness occurring in the unpolished glass (the vertical direction or the horizontal direction of the display panel) is measured by a given measurement method such as microscopic observation. The resolution of the imaging camera 30 is then raised according to the direction of the stripe unevenness so as to be able to resolve the stripe unevenness. For example, the horizontal resolution may be raised in the case of stripe unevenness in the vertical direction of the display panel, and the vertical resolution may be raised in the case of stripe unevenness in the horizontal direction. Thus, image correction data can be efficiently generated according to the direction of the stripe unevenness.

## Claims

1. An image correction data generating system for a display panel comprising a plurality of pixels, and a glass substrate consisting of unpolished glass, the image correction data generating system comprising:
a signal generator (40) for supplying the display panel with a signal for outputting an image on that display panel;
an imager (30) for capturing an output image displayed on the display panel; and
a controller (21) connected to the signal generator (40) and the imager (30);
wherein the imager (30) is able to capture an area smaller than the individual pixel sizes of the plurality of pixels of the display panel, and to be set to increase the resolution of the capturing in the direction orthogonal to a direction of the stripe unevenness in the unpolished glass, and
the controller (21) is equipped with
an instructing unit (211) for outputting instructions for supplying a signal value with matching R,G,B signal values shared across the entire surface of the display panel to the signal generator (40),
an image acquirer (211) for acquiring output image data from the imager,
a high-pass filtering (212) arranged to compute high-pass data by applying high-pass filtering to the output image data and thus allowing only components of the output data at or above a filtering frequency to pass through, and [0011], [0030], [0032]
a correction data generator (211) for outputting an image correction table corresponding to the high-pass data, **characterized in that** the image correction data generating system further comprises
a panel information storage unit (22) arranged to store panel management records for identifying the production lot which produced the unpolished glass being used in a liquid crystal panel (10), wherein the panel management records include a panel identifier data area and a lot identifier data area, [0023]
a glass information storage unit (23) arranged to store glass management records for identifying surface state information regarding unpolished glass from respective production lots, wherein the glass management records include a lot identifier data area and a surface state identifier data area, [0025]
wherein the controller (21) is arranged to receive via an user input means a panel identifier, [0032]
to acquire the lot identifier associated with the panel identifier from the panel information storage unit (22), [0032]
to acquire the surface state identifier associated with the lot identifier from the glass information storage unit (23), and [0032]
to use a filter determination table to specify a filtering frequency corresponding to the surface state identifier as the filtering frequency of the high-pass filtering (212). [0032]

2. A method of operating the image correction data generating system as defined in claim 1 for generating image correction data for a display panel comprising a glass substrate consisting of unpolished glass and a plurality of pixels, the image correction data generating method comprising the controller (21) executing:
a step for outputting instructions for supplying a signal value with matching R, G, B signal values shared across the entire surface of the display panel to the signal generator;
a step for acquiring output image data from the imager (30) ;
a step for computing high-pass data by applying high-pass filtering to the output image data and thus allowing only components of the output data at or above a filtering frequency to pass through;
a step for outputting an image correction table corresponding to the high-pass data; and
a step for receiving via user input means a panel identifier;
a step for acquiring the lot identifier associated with the panel identifier from the panel information storage unit (22),
a step for acquiring the surface state identifier associated with the lot identifier from the glass information storage unit (23), and
a step for using a filter determination table to specify a filtering frequency corresponding to the surface state identifier as the filtering frequency of the high-pass filtering (212).

3. A computer program adapted to perform the method as defined in claim 2.

4. A computer readable storage memory (51) comprising the computer program as defined in claim 3.

5. A display panel (10) comprising a plurality of pixels and a glass substrate consisting of unpolished glass, including the memory (51) as defined in claim 4.

## Patentansprüche

1. Bildkorrektur-Datenerzeugungssystem für ein Anzeigepaneel, das mehrere Pixel umfasst, und ein Glas-Substrate, das aus nicht-poliertem Glas besteht, worin das Bild-korrektur-Datenerzeugungssystem umfasst:
eine Signalerzeugungseinrichtung (40) zur Lieferung eines Signals an das Display-Paneel zur Ausgabe eines Bilds auf dem Anzeige-Paneel;
einen Imager (30) zum Erfassen eines an dem Anzeige-Paneel angezeigten Ausgabe-Bildes; und
einen Kontroller (21), der mit der Signal-Erzeugungseinrichtung (40) und dem Imager (30) verbunden ist;
worin der Imager (30) in der Lage ist, einen Bereich kleiner als die individuelle Pixelgrößen der mehreren Pixel des Anzeige-Paneels zu erfassen, und darauf abzielt, die Auflösung der Erfassung in Richtung orthogonal zu einer Richtung der Streifen-Unausgeglichenheit in dem nicht-polierten Glas zu erhöhen, und
worin der Kontroller (21) mit einer Befehlseinheit (211) ausgestaltet ist, um Befehle zur Lieferung eines Signalwertes mit passenden R,G,B-Signalwerten, die über die gesamte Fläche des Anzeige-Paneels geteilt werden, an die Signalerzeugungseinrichtung (40) auszugeben,
eine Bildübernahmeeinrichtung (211) zur Erlangen ausgegebener Bilddaten von dem Imager,
einen Hochpassfilter (212), der ausgestaltet ist, durch Anlegen von Hochpass-Filtern an die ausgegebenen Bild-Daten Hochpass-Daten zu berechnen so dass nur Komponenten der ausgegebenen Daten bei oder über der Filtergrenze durchgelangen, und [0011], [0030], [0032]
eine Korrektur-Datenerzeugungseinrichtung (211) zur Ausgabe einer Bild-Korrektur-Tabelle, die den Hochpass-Daten entsprechen, **dadurch gekennzeichnet, dass** das Bildkorrektur-Datenerzeugungssystem weiter umfasst,
eine Paneel-Informations-Speichereinheit (22), die ausgestaltet ist, Paneel-Management-Aufzeichnungen zu speichern, um die Produktionscharge, mit der das nichtpolierte in einem Flüssigkristall-Paneel (10) verwendete Glas hergestellt wurde zu identifizieren, worin die Paneel-Management-Aufzeichnungen einen Paneel-Identifikations-Daten-Bereich und einen Chargen-Identifikations-Daten-Bereich umfasst, [0023]
eine Glas-Informations-Speichereinheit (23), die ausgestaltet ist, Glas-Management-Aufzeichnungen zur Identifizierung der Oberflächen-Zustandsinformation bezüglich des nicht-polierten Glas aus den jeweiligen Produktions-Chargen zu speichern, worin die Glas-Management-Aufzeichnungen einen Chargen-Identifikations-Daten-Bereich und einen Oberflächenzustands-Identifikations-Daten-Bereich umfassen, [0025]
worin der Kontroller (21) ausgestaltet ist, über ein User-Eingabemittel eine Paneel-Identifikation zu empfangen, [0032]
um die mit der Paneel-Identifikation assoziierten Chargen-Identifikation von der Paneel-Informations-Speichereinheit (22) zu erhalten, [0032]
um die mit der Chargen-Identifikation assoziierten Oberflächenzustands-Identifikation von der Glas-Informations-Speichereinheit (23) zu erhalten, und [0032]
um eine Filter-Bestimmungs-Tabelle zu verwenden, um eine Filterfrequenz ent-sprechend der Oberflächenzustands-Identifikation als die Filterfrequenz der Hochpassfilterung (212) zu spezifizieren. [0032]

2. Verfahren zum Betrieb des Bildkorrektur-Datenerzeugungssystems nach Anspruch 1 zur Erzeugung von Bildkorrektur-Daten für ein Anzeige-Paneel, das ein Glas-Substrat bestehend aus nicht-poliertem Glas und mehrere Pixeln umfasst, wobei das Bildkorrektur-Daten erzeugende Verfahren umfasst, dass der Kontroller (21) ausführt:
einen Schritt zur Ausgabe von Instruktionen zum Liefern eines Signalwertes mit passenden R,G,B-Signalwerten, die über die gesamte Oberfläche des Anzeige-Paneels geteilt werden, zu der Signalerzeugungseinrichtung;
einen Schritt zum Erlangen von Ausgabe-Bild-Daten von dem Imager (30);
einen Schritt zum Berechnen von Hochpass-Daten durch Anlegen von Hochpass-Filtern an die ausgegebenen Bild-Daten so dass nur Komponenten der ausgegebenen Daten bei oder über einer Filter-Frequenz durchgelangen;
einen Schritt zur Ausgabe einer Bild-Korrektur-Tabelle entsprechend der Hochpass-Daten; und
einen Schritt des Empfangens einer Paneel-Identifikation über ein Nutzer-EingabeMittel;
einen Schritt zum Erwerben der mit der Paneel-Identifikation assoziierten Chargen-Identifikation von der Paneel-Informations-Speichereinheit (22),
einen Schritt zum Erlangen der mit der Chargen-Identifikation assoziierten Oberflächenzustands-Identifikation von der Glas-Information Speichereinheit (23), und
einen Schritt zur Verwendung einer Filter-Bestimmungs-Tabelle, um eine Filterfrequenz entsprechend der Oberflächenzustands-Identifikation als die Filterfrequenz des Hochpass-Filters (212) zu spezifizieren.

3. Computerprogramm, das angepasst ist, das in Anspruch 2 definierte Verfahren durchzuführen.

4. Computer lesbarer Speicher (51), welcher das Computerprogramm nach Anspruch 3 umfasst.

5. Anzeige-Paneel (10), das mehrere Pixel und ein Glas-Substrat umfasst, das aus nicht-poliertem Glas besteht, einschließlich des Speichers (51) nach Anspruch 4.

## Revendications

1. Système de génération de données de correction d'image destiné à un panneau d'affichage comprenant une pluralité de pixels, et un substrat en verre composé de verre non poli, le système de génération de données de correction d'image comprenant :
un générateur de signal (40) destiné à fournir au panneau d'affichage un signal destiné à restituer une image sur ledit panneau d'affichage ;
un imageur (30) destiné à capturer une image de sortie affichée sur le panneau d'affichage ; et
un contrôleur (21) relié au générateur de signal (40) et à l'imageur (30) ;
dans lequel l'imageur (30) peut capturer une surface plus petite que les dimensions des pixels individuels de la pluralité de pixels du panneau d'affichage, et être réglé pour augmenter la résolution de la capture dans la direction orthogonale par rapport à une direction d'irrégularité de bandes dans le verre non poli, et
le contrôleur (21) est équipé
d'une unité d'instructions (211) destinée à fournir des instructions de délivrance d'une valeur de signal avec des valeurs de signal R, V, B correspondantes partagées sur la surface entière du panneau d'affichage au générateur de signal (40),
un acquéreur d'image (211) destiné à acquérir des données d'image de sortie auprès de l'imageur,
un filtrage passe-haut (212) prévu pour calculer des données passe-haut en appliquant un filtrage passe-haut aux données d'image de sortie, et en permettant ainsi uniquement aux composantes des données de sortie égales ou supérieures à une fréquence de filtrage de passer, et
un générateur de données de correction (211) destiné à fournir une table de correction d'image correspondant aux données passe-haut,
**caractérisé en ce que** le système de génération de données de correction d'image comprend en outre
une unité de stockage d'informations de panneau (22) prévue pour stocker des dossiers de gestion de panneau destinés à identifier le lot de production qui a produit le verre non poli utilisé dans un panneau à cristaux liquides (10), les dossiers de gestion de panneau comprenant une zone de données d'identifiant de panneau et une zone de données d'identifiant de lot,
une unité de stockage d'informations de verre (23) prévue pour stocker des dossiers de gestion du verre destinés à identifier des informations d'état de surface relatives au verre non poli parmi des lots de production respectifs, les dossiers du gestion du verre comprenant une zone de données d'identifiant de lot et une zone de données d'identifiant d'état de surface,
dans lequel le contrôleur (21) est prévu pour recevoir, par le biais d'un moyen de saisie utilisateur, un identifiant de panneau,
pour acquérir l'identifiant de lot associé à l'identifiant de panneau auprès de l'unité de stockage d'informations de panneau (22),
pour acquérir l'identifiant d'état de surface associé à l'identifiant de lot auprès de l'unité de stockage d'informations de verre (23), et
pour utiliser une table de détermination de filtre afin de spécifier une fréquence de filtrage correspondant à l'identifiant d'état de surface comme étant la fréquence de filtrage du filtrage passe-haut (212).

2. Procédé de fonctionnement du système de génération de données de correction d'image selon la revendication 1 destiné à générer des données de correction d'image pour un panneau d'affichage comprenant un substrat en verre composé de verre non poli et une pluralité de pixels, le procédé de génération de données de correction d'image comprenant le contrôleur (21) exécutant :
une étape qui consiste à fournir des instructions de délivrance d'une valeur de signal avec des valeurs de signal R, V, B correspondantes partagées sur la surface entière du panneau d'affichage au générateur de signal ;
une étape d'acquisition de données d'image de sortie auprès de l'imageur (30) ;
une étape de calcul de données passe-haut en appliquant un filtrage passe-haut aux données d'image de sortie, et en permettant ainsi uniquement aux composantes des données de sortie égales ou supérieures à une fréquence de filtrage de passer ;
une étape qui consiste à fournir une table de correction d'image correspondant aux données passe-haut ; et
une étape de réception, par le biais d'un moyen de saisie utilisateur, d'un identifiant de panneau ;
une étape d'acquisition de l'identifiant de lot associé à l'identifiant de panneau auprès de l'unité de stockage d'informations de panneau (22),
une étape d'acquisition de l'identifiant d'état de surface associé à l'identifiant de lot auprès de l'unité de stockage d'informations de verre (23), et
une étape d'utilisation d'une table de détermination de filtre afin de spécifier une fréquence de filtrage correspondant à l'identifiant d'état de surface comme étant la fréquence de filtrage du filtrage passe-haut (212).

3. Programme informatique adapté pour exécuter le procédé selon la revendication 2.

4. Mémoire de stockage lisible par un ordinateur (51) comprenant le programme informatique selon la revendication 3.

5. Panneau d'affichage (10) comprenant une pluralité de pixels et un substrat en verre composé de verre non poli, comprenant la mémoire (51) selon la revendication 4.
